(19) **Europäisches Patentamt**

**European Patent Office**

**Office européen des brevets**

(11) **EP 0 771 067 B1**

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.6: **H02P 21/00**

(21) Anmeldenummer: **95116902.8**

(22) Anmeldetag: **26.10.1995**

(54) **Verfahren und Vorrichtung zur feldorientierten Regelung einer Drehfeldmaschine**

Method and device for driving a rotating field machine by controlling the field orientation

Procédé et dispositif pour la régulation d'une machine à champ tournant, par l'orientation du champ

(84) Benannte Vertragsstaaten:
**AT CH DE DK ES FR GB IT LI NL SE**

(43) Veröffentlichungstag der Anmeldung:
**02.05.1997 Patentblatt 1997/18**

(73) Patentinhaber: **SIEMENS AKTIENGESELLSCHAFT**
**80333 München (DE)**

(72) Erfinder: **Künzel, Stefan, Dipl.-Ing.**
**D-91056 Erlangen (DE)**

(56) Entgegenhaltungen:
**EP-A- 0 117 514**      **EP-A- 0 553 370**
**WO-A-90/15472**      **US-A- 5 272 429**

- **EPE'95, Bd. 1, 19. - 21.September 1995 SEVILLA, SPAIN, Seiten 1431-1436, XP 000537562 A.A.GANJI & AL. 'Rotor time constant compensation of an induction motor in indirect vector controlled drives'**

## Beschreibung

Die Erfindung betrifft ein Verfahren sowie eine dazugehörige Vorrichtung zur feldorientierten Regelung einer Drehfeldmaschine.

Als drehzahlveränderliche Antriebe werden bislang überwiegend Gleichstromantriebe eingesetzt. Diese kommen insbesondere bei numerisch gesteuerten Werkzeugmaschinen und Robotern, aber auch bei anderen Anwendungen der Automatisierungstechnik zum Einsatz. Diese Antriebe können leicht geregelt werden, erfordern jedoch aufgrund des Vorhandenseins eines Kommutators eine Wartung durch fachkundiges Personal. Außerdem unterliegt ein solcher Kommutator einem hohen Verschleiß, wodurch die Lebensdauer einer Gleichstrommaschine negativ beeinflußt wird. Insbesondere um eine völlige Wartungsfreiheit zu erreichen, werden in neuerer Zeit zunehmend Asynchronmaschinen bzw. Drehfeldmaschinen verwendet. Durch das Fehlen des Kommutators entfällt dabei auch die drehzahlabhängige Leistungsbegrenzung, so daß das volle Motormoment auch im Stillstand zur Verfügung steht. Um dabei jedoch die erforderliche Qualität der Drehzahlregelung zu erreichen, ist im Vergleich zum Gleichstromantrieb ein aufwendiges Speiseglied mit zweimaliger Energieumformung, einer Drehstrom-Gleichstrom-Drehstrom-Umformung, erforderlich. Desweiteren wird eine komplexe Regelungsstruktur benötigt. Der Fortschritt sowohl auf dem Gebiet der Leistungshalbleiter durch abschaltbare schnelle Schalter als auch in der Informationselektronik durch sehr leistungsfähige Mikroprozessoren erlaubt es nunmehr, Einrichtungen der eingangs genannten Art, die nach dem Prinzip der Feldorientierung arbeiten, für den anspruchsvollen Einsatz bei Werkzeugmaschinen vorzusehen.

Bei den bisher eingesetzten Verfahren zur feldorientierten Regelung von Drehfeldmaschinen werden eine momentbildende und eine flußbildende Größe eingeprägt, wobei der Flußbetrag aus einem Strommodell und die Flußlage indirekt bestimmt werden. Bei diesen Verfahren führen Abweichungen der Motorhauptfeldreaktanz oder des Läuferwiderstandes von den im Modell benutzten Daten zu einem veränderten Spannungsbedarf oder einer Fehlorientierung. Die Hauptfeldreaktanz verändert sich aufgrund eintretender magnetischer Sättigung oder Fertigungstoleranzen des Luftspalts. Bei Motoren des gleichen Typs sind daher Unterschiede in der Hauptfeldreaktanz von bis zu 20% möglich. Der Läuferwiderstand ändert sich mit der Temperatur des Läufers und führt bei Abweichungen von festgelegten Modellparametern zu einer Fehlorientierung. Eine solche Fehlorientierung jedoch bewirkt entweder ein ungewolltes Erreichen der Spannungsdecke und damit ein Verschlechtern der Regelungseigenschaften oder aber eine Einbuße der abgegebenen Motorleistung aufgrund zu niedriger Spannung.

Die Änderungen der Hauptfeldreaktanz werden bei bisherigen Lösungen durch eine Entsättigungskennlinie berücksichtigt, die Änderung des Läuferwiderstandes durch ein Temperaturmodell. Sowohl Streuungen der Motordaten als auch Fehler des Temperaturmodells bleiben unberücksichtigt und führen zu Leistungseinbußen. Insbesondere bei wassergekühlten Motoren ist das Temperaturmodell, welches auf die Ständertemperatur aufbaut, teilweise ungenau.

Eine bekannte Stromregelung zur feldorientierten Regelung von Drehfeldmaschinen, welche mit Regelungsparametern arbeitet, die im kartesischen Koordinatensystem vorliegen, arbeitet nach dem sogenannten d/q-Verfahren. Dabei wird der Raumzeiger des Stromes mit dem Winkel entweder der aktuellen Rotor-, Ständer- oder Hauptflußlage in ein mit der Flußlage umlaufendes Koordinatensystem transformiert und man regelt die Komponente in Flußrichtung (d-Komponente) sowie die senkrecht zur Flußrichtung (q-Komponente), welche stationär konstant sind, mit einem Regler mit Ausgleich, z.B einem integralen Regler. Als Sollwerte dienen der flußbildende und der momentbildende Strom. Der Ausgang der Regler ist der Spannungsraumzeiger in Flußkoordinaten, der mit dem Winkel der Flußlage in das ständerfeste System zurücktransformiert wird. Ein solches Verfahren besitzt den Nachteil, daß es in der Spannungsdecke zu einem Orientierungsverlust insbesondere im generatorischen Betrieb der Drehfeldmaschine kommen kann, was schwerwiegende Folgen für das Verhalten des Antriebs haben kann. Das liegt daran, daß die Flußlage in der Spannungsdecke falsch ermittelt wird. Dies kann dazu führen, daß das Moment der Drehfeldmaschine nicht mehr gezielt verstellt werden kann, beim generatorischen Betrieb können Überströme auftreten. Da bei der Drehfeldmaschine das maximal mögliche Moment dem Quadrat der Spannung proportional ist, wird stets ein Betrieb in der Nähe der Spannungsdecke angestrebt, was jedoch unter Anwendung dieses herkömmlichen Verfahrens die genannten Nachteile mit sich bringt.

In der EP-0 474 629 ist ein Verfahren gezeigt, in dem die Probleme des Orientierungsverlustes in der Spannungsdecke durch eine Stromregelung mit impliziter Feldschwächung mit Hilfe einer analogen Regelung behoben werden. Dieses Verfahren zur analogen Regelung arbeitet ähnlich wie das d/q-Verfahren, jedoch mit dem Unterschied, daß mit Größen geregelt wird, die im polaren Koordinatensystem vorliegen. Eine eventuelle Winkel- oder Amplitudenabweichung wird nach Betrag und Winkel ausgeregelt. In diesem Verfahren werden Stromsollwerte produziert, die mit Phasenstromreglern weiterverarbeitet werden, was jedoch den gravierenden Nachteil hoher Rechenzeiten besitzt, so daß bis heute nur eine Realisierung in Hardware möglich ist. Bei diesem Verfahren tritt hingegen der oben genannte Orientierungsverlust (falsche Flußerfassung durch indirekte Flußerfassung) nicht auf. Eine Realisierung als digitaler Regler ist aufgrund der erforderlichen Rechenkapazitäten nicht möglich. In diesem Hinblick erweist sich das d/q-Verfahren als günstiger.

Desweiteren sind weitere Verfahren zur feldorientierten Regelung von Drehfeldmaschinen bekannt, bei denen eine Erfassung des Flusses vorgenommen wird. Eine solche Erfassung des Flusses wird dabei mit Hilfe einer Integration von Spannungen vorgenommen. Da bei einer solchen Integration jedoch kleine Fehler im Eingang zu großen Fehlern am Ausgang führen können und sich das Ergebnis außerdem zusätzlich noch um einen konstanten Wert unterscheiden kann, sind bei einer solchen Vorgehensweise Nachführalgorithmen nötig. Solche Nachführalgorithmen benötigen jedoch Rechenkapazität, welche an anderer Stelle sinnvoll genutzt werden könnte. Zusätzlich führen sie dazu, daß lange Einschwingzeiten auftreten, so daß der erfaßte Fluß mit einer Verzögerung verfügbar ist. Dies ist insbesondere im Hinblick auf die heutigen hohen dynamischen Anforderungen nachteilig.

In der EP-92 101 293 ist eine Einrichtung zum Regeln von Drehfeldmaschinen ohne Rotorlageerfassung vorgeschlagen worden. Dabei werden als Grundlage der Auswertung Leistungen und der Strombetrag benötigt, die erst durch eine Hardwareschaltung oder aufwendige Berechnungen bereitgestellt werden müssen, die jedoch dafür stationär konstant sind. Eine direkte Verarbeitung von Spannungen und Strömen, welche bei einer Regelung mit unterlagertem Regler bekannt sind, ist damit nicht möglich.

Aus der Veröffentlichung "Rotor time constant compenstion of an induction motor in indirect vector controlled drives", Sevilla vom 19.09.95, Seiten 1431 bis 1436, ist eine Möglichkeit zur Bestimmung des Rotorflusses anhand nicht-stationärer Größen bekannt. Die dort vorgeschlagene Methode zieht jedoch die Statorkreisfrequenz mit ein, weshalb eine dynamische Auswertung der vorgeschlagenen Berechnungsvorschriften unmöglich ist.

Aufgabe der Erfindung ist es, ein Verfahren sowie eine Vorrichtung der eingangs genannten Art so auszugestalten, daß eine feldorientierte Regelung geschaffen wird, welche eine Flußerfassung bereitstellt und welche Schwankungen der Hauptfeldreaktanz und des Läuferwiderstandes aufgrund eines Abweichens der realen Motorparameter von zugrundegelegten Modellparametern toleriert, ohne ungewollt die Spannungsdecke zu erreichen oder Leistungseinbußen in Kauf zu nehmen. Desweiteren sollen nicht lediglich stationäre Größen, sondern die schwieriger zu handhabenden direkten nicht-stationären Größen wie Spannungen und Ströme dynamisch zur Regelung verwendet werden können und darüber hinaus die im vorangehenden dargestellten Nachteile der herkömmlichen Verfahren und Vorrichtungen zur feldorientierten Regelung wie lange Einschwingzeiten der Regelstrukturen oder Instabilitäten und Fehlorientierungen vermieden werden können. Desweiteren soll das Verfahren sowie die dazugehörige Vorrichtung sowohl in Hardware, als auch in Software realisierbar sein.

Aufgrund der allgemeinen technischen Praxis auf dem Gebiet der feldorientierten Regelungen werden, wie üblich, die Begriffe Feld und Fluß in demselben Zusammenhang verwendet. Es sei jedoch an dieser Stelle darauf hingewiesen, daß streng genommen immer der Fluß die relevante Größe ist. Der besseren Verständlichkeit halber sollen jedoch die in der Fachwelt geläufigen Bezeichnungen auch in den folgenden Ausführungen verwendet werden.

Gemäß der Erfindung wird diese Aufgabe durch die folgenden Verfahrensschritte gelöst:

1.1 eine momentbildende Größe wird eingeprägt,

1.2 eine flußbildende Größe wird eingeprägt und über einen Feldregelkreis geregelt,

1.3 der Rotorfluß wird aus den nicht-stationären Größen des Ständerspannungsraumzeigers und des Ständerstromraumzeigers nach oder proportional der folgenden prinzipiellen Beziehung

$$\psi_R = \frac{L_R}{L_H} * \frac{\underline{U}_s - R\,\underline{I}_s - L_G * \dfrac{d\underline{I}_s}{dt}}{\left(j\omega_R - \dfrac{R_R}{L_R}\right)}$$

mit

$$R' = R_S + R_R * \frac{L_H^2}{L_R^2} \quad \text{und} \quad L_G = L_S - \frac{L_H^2}{L_R}$$

$L_R$ = Rotorinduktivität
$L_H$ = Hauptfeldinduktivität
$L_S$ = Statorinduktivität
$R_R$ = Rotorwiderstand
$R_S$ = Ständerwiderstand
$\omega_R$ = Elektrische Rotorkreisfrequenz

bestimmt, woraus durch Koordinatentransformation Flußbetrag und Flußwinkel ermittelt werden,

1.4 der Flußbetrag wird über den Feldregelkreis eingeprägt,

1.5 Orientierungsfehler der Feldachse werden durch eine Frequenzverstellung, insbesondere durch Verstellung der Schlupffrequenz, entsprechend einer Differenz zwischen benutztem Transformationswinkel und erfaßtem Flußwinkel korrigiert,

1.6 über einen Stromregelkreis oder Spannungsregelkreis werden die das Drehfeld der Maschine auslösenden Spannungen bzw. Ströme entsprechend den korrigierten Sollgrößen erzeugt.

In einer ersten vorteilhaften Ausgestaltung des Verfahrens gemäß der vorliegenden Erfindung wird darüber hinaus erreicht, daß das Verfahren sowohl für Antriebe mit Erfassung der Rotorlage als auch für solche ohne Erfassung der Rotorlage angewandt werden kann. Dies geschieht durch folgende weitere Verfahrens-

schritt:

2.1 die elektrische Rotorkreisfrequenz wird direkt durch Messung der Ist-Drehzahl oder der Rotorlage bestimmt oder indirekt aus dem Signal zur Orientierungskorrektur abgeleitet oder aus einem eventuell vorhandenen Lageregelkreis übernommen.

In einer weiteren vorteilhaften Ausgestaltung des Verfahrens gemäß der vorliegenden Erfindung wird darüber hinaus erreicht, daß Momentenstöße und Instabilitäten bei einer Orientierungskorrektur vermieden werden können. Außerdem wird eine besonders einfach zu ermittelnde Größe zur Korrektur geschaffen. Dies wird durch folgende weitere Verfahrensschritte erreicht:

3.1 die Orientierungkorrektur erfolgt nicht abrupt, sondern allmählich auf sanfte Art und Weise, insbesondere durch integrale Ausregelung,

3.2 die Schlupffrequenz wird als eine dem Quotienten aus momentbildender Größe und dem vorliegenden Fluß proportionale Größe bestimmt.

In einer weiteren vorteilhaften Ausgestaltung des Verfahrens gemäß der vorliegenden Erfindung wird erreicht, daß das Übergangsverhalten der Drehzahlregelung verbessert wird und darüber hinaus das Einschwingverhalten der Orientierungsregelung verringert wird. Dies geschieht durch folgenden weiteren Verfahrensschritt:

4.1 aus dem Signal zur Orientierungskorrektur wird ein weiteres Korrektursignal zum Nachführen des Rotorwiderstands abgeleitet.

Um ein solches vorteilhaftes Verfahren zur feldorientierten Regelung einer Drehfeldmaschine gemäß der Erfindung auf einfache Art und Weise zu realisieren, wird die Aufgabe mittels einer Einrichtung mit folgenden Merkmalen gelöst:

5.1 es sind Mittel zur Generierung einer flußbildenden Größe und einer momentbildenden Größe vorgesehen,

5.2 es sind Mittel zur Flußerfassung nach oder proportional der prinzipiellen Beziehung für den Rotorfluß

$$\psi_R = \frac{L_R}{L_H} * \frac{\underline{U}_s - R\,\underline{I}_s - L_G * \dfrac{d\underline{I}_s}{dt}}{\left(j\omega_R - \dfrac{R_R}{L_R}\right)}$$

mit

$$R' = R_S + R_R * \frac{L_H^2}{L_R^2} \quad \text{und} \quad L_G = L_S - \frac{L_H^2}{L_R}$$

$L_R$ = Rotorinduktivität
$L_H$ = Hauptfeldinduktivität
$L_S$ = Statorinduktivität
$R_R$ = Rotorwiderstand
$R_S$ = Ständerwiderstand
$\omega_R$ = Elektrische Rotorkreisfrequenz

vorgesehen, woraus durch Koordinatentransformation Flußbetrag und Flußwinkel ermittelbar ist,

5.3 es sind Mittel zum Regeln der Feldachse, insbesondere eine Feldregelung und Stromregelung vorgesehen,

5.4 es sind Mittel zum Ausgleich von Orientierungsfehlern der Feldachse durch eine Frequenzverstellung, insbesondere durch Verstellung der Schlupffrequenz, entsprechend einer Differenz zwischen benutztem Transformationswinkel und erfaßtem Flußwinkel vorgesehen,

5.5 es sind Mittel zur Bestimmung der das Drehfeld der Maschine auslösenden Spannungen bzw. Ströme entsprechend den korrigierten Sollgrößen vorgesehen.

In einer ersten vorteilhaften Ausgestaltung der Vorrichtung gemäß der vorliegenden Erfindung wird erreicht, daß eine einfach zu ermittelnde und besonders gut geeignete Größe zur Beeinflußung für die Orientierungskorrektur geschaffen wird. Dies wird durch folgende weitere Merkmale erreicht:

6.1 die Schlupffrequenz wird über ein Schlupfbestimmungsglied als eine dem Quotienten aus momentbildender Größe und dem vorliegenden Fluß proportionale Größe bestimmt.

In einer weiteren vorteilhaften Ausgestaltung der Vorrichtung gemäß der vorliegenden Erfindung wird erreicht, daß die Vorrichtung auch mit Antrieben mit einer Erfassung der Rotorlage effektiv durchgeführt wird. Dies geschieht durch folgendes weiteres Merkmal:

7.1 es ist ein Drehzahlgeber bzw. ein Lagegeber zur Ermittlung einer Ist-Drehzahl oder der Rotorlage der Drehfeldmaschine für die Drehzahlregelung vorgesehen, dessen Signal zugleich zur Bestimmung der elektrischen Rotorkreisfrequenz dient.

In einer weiteren vorteilhaften Ausgestaltung der Vorrichtung gemäß der vorliegenden Erfindung wird erreicht, daß die Vorrichtung auch für solche Antriebe ohne Erfassung der Rotorlage mit den eingangs genannten Vorteilen effektiv realisiert wird. Dies geschieht durch folgendes weiteres Merkmal:

8.1 aus dem Signal zur Orientierungskorrektur ist ein weiteres Signal abgeleitet, welches zugleich als eine der Ist-Drehzahl der Drehfeldmaschine entsprechende Größe für die Drehzahlregelung dient.

In einer weiteren vorteilhaften Ausgestaltung der Vorrichtung gemäß der vorliegenden Erfindung wird erreicht, daß das Übergangsverhalten der Vorrichtung verbessert wird und darüber hinaus die Einschwingzeiten des darin enthaltenen Orientierungsreglers verkürzt werden. Dies geschieht durch folgendes weiteres Merkmal:

9.1 es sind Mittel zur Korrektur des Rotorwiderstands vorgesehen, denen das Signal zur Orientierungskorrektur als Maß für die Rotorwiderstandskorrektur dient.

Weitere Vorteile und erfinderische Einzelheiten ergeben sich aus nachfolgender Beschreibung zweier Ausführungsbeispiele anhand der Zeichnungen und in Verbindung mit den Unteransprüchen. Dabei sind gleiche Elemente gattungsbildend mit gleichen Bezugszeichen bezeichnet, gleiche Elemente jedoch nicht zwangsläufig dieselben. Im einzelnen zeigen:

FIG 1 Blockschaltbild einer Vorrichtung zur feldorientierten Regelung für eine Drehfeldmaschine mit Erfassung der Rotorlage und
FIG 2 Blockschaltbild einer Vorrichtung zur feldorientierten Regelung für eine Drehfeldmaschine ohne Erfassung der Rotorlage.

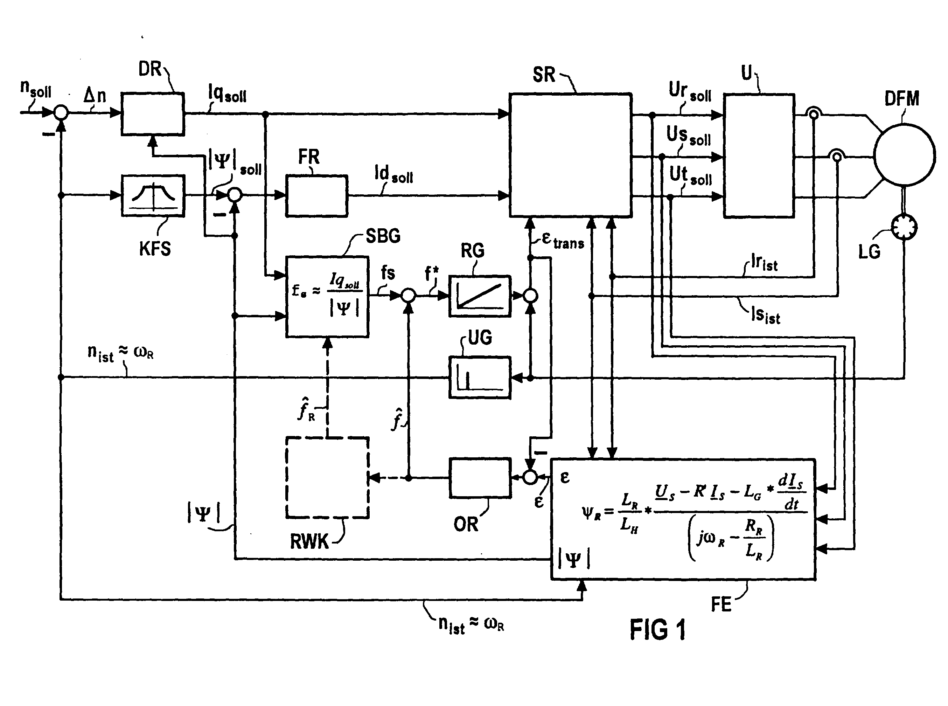

In der Darstellung gemäß FIG 1 ist ein Blockschaltbild einer Vorrichtung zur feldorientierten Regelung gemäß der vorliegenden Erfindung für eine Drehfeldmaschine DFM mit Erfassung LG der Rotorlage gezeigt. Dabei ist auf den Anwendungsfall einer Drehzahlregelung Bezug genommen. Denkbar ist jedoch auch eine Anwendung ohne einen Drehzahlregler, z.B. durch direkte Vorgabe einer momentbildenden Größe. Dies ist beispielsweise dann sinnvoll, wenn ein vorab bekanntes, fest vorgegebenes Moment realisiert werden soll. Im vorliegenden Ausführungsbeispiel wird eingangsseitig eine Solldrehzahl $n_{soll}$ vorgegeben. Die Solldrehzahl $n_{soll}$ wird mit einer Ist-drehzahl $n_{ist}$ verglichen und das Differenzergebnis $\Delta n$ gelangt an den Eingang eines Drehzahlreglers DR. Die Istdrehzahl $n_{ist}$ wird dabei entweder über einen Drehzahlgeber oder aber, wie in FIG 1 gezeigt, über einen Lagegeber LG aus dem von diesem Lagegeber LG ermittelten Lagewert durch ein Umrechnungsglied UG abgeleitet. Der Drehzahlregler DR kann nach Art eines PI-Reglers ausgebildet sein. Am Ausgang des Drehzahlreglers DR steht dann eine einem Sollmoment entsprechende drehmomentbildende Größe, im vorliegenden Ausführungsbeispiel eine drehmomentbildende Stromkomponente $Iq_{soll}$ als Ausgangssignal an. Dieses gelangt an einen ersten Eingang eines Stromreglers SR, an dessen weiteren Eingang ein dem Fluß einer anzusteuernden Drehfeldmaschine DFM entsprechendes flußbildendes Signal, im vorliegenden Ausführungsbeispiel ein flußbildender Strom $Id_{soll}$, anliegt. Diese flußbildende Größe $Id_{soll}$ wird von einem Feldregler FR bereitgestellt. Auf die Bildung des Eingangssignals des Feldreglers FR wird im folgenden noch eingegangen.

Im Stromregler SR werden die das Drehfeld der Maschine DFM auslösenden Spannungen in Form von drei um jeweils 120° phasenverschobenen Spannungen $Ur_{soll}$, $Us_{soll}$ und $Ut_{soll}$ gemäß dem an den Eingängen des Stromreglers SR vorliegenden Soll-Istwertvergleich erzeugt. Dabei werden die eingangsseitig in einem mit dem Fluß umlaufenden Koordinatensystem vorliegenden Größen in ausgangsseitige Werte im Ständerkoordinatensystem transformiert. Die so erzeugten Spannungssollwerte werden einem Umrichter U zugeleitet, der diese Spannungen an die Klemmen der Drehfeldmaschine DFM anlegt.

Zur weiteren Ansteuerung des Stromreglers SR werden zwei der drei die Drehfeldmaschine DFM ansteuernden Stromgrößen, im vorliegenden Ausführungsbeispiel sind dies die Größen $Ir_{ist}$ und $Is_{ist}$, zum Stromregler SR rückgeführt. Außerdem werden diese beiden Stromgrößen noch zu einer Recheneinheit zur Flußerfassung FE geführt. An weitere Eingänge der Recheneinheit zur Flußerfassung FE sind die drei vom Stromregler SR ausgehenden um 120° gegeneinander phasenverschobenen Spannungen $Ur_{soll}$, $Us_{soll}$ und $Ut_{soll}$ geführt.

In diesem Rechenwerk zur Flußerfassung FE wird der Fluß nach Betrag und Winkel erfaßt. Dies geschieht insbesondere nach der folgenden besonders geeigneten Berechnungsvorschrift, welche eine Ermittlung des Rotorflusses $\Psi_R$ anhand geeigneter, einfach zu ermittelnder nicht-stationärer Größen des Ständers der Drehfeldmaschine DFM ermöglicht. Diese Berechnungsvorschrift besitzt die folgende Form

$$\Psi_R = \frac{L_R}{L_H} * \frac{\underline{U}_S - R' \underline{I}_S - L_G * \dfrac{d\underline{I}_S}{dt}}{\left(j\omega_R - \dfrac{R_R}{L_R}\right)}$$

mit

$$R' = R_S + R_R * \frac{L_H^2}{L_R^2} \quad \text{und} \quad L_G = L_S - \frac{L_H^2}{L_R}$$

$L_R$ = Rotorinduktivität
$L_H$ = Hauptfeldinduktivität
$L_S$ = Statorinduktivität
$R_R$ = Rotorwiderstand
$R_S$ = Ständerwiderstand
$\omega_R$ = Elektrische Rotorkreisfrequenz

Es können jedoch auch andere Berechnungsvorschriften zur Erfassung des Flusses zum Tragen kommen, wenn man beispielsweise auf den Ständerfluß oder den Hauptfluß orientiert. Vorteil der obengenannten Rechnungsvorschrift ist jedoch das Wegfallen einer Integration, was zum einen aufwendige Rechenoperationen entbehrlich macht und darüber hinaus die eingangs beschriebene Gefahr der Entstehung großer Fehler am Ausgang aufgrund von kleinen Fehlern am Eingang vermeidet. Weitere Rechenzeit wird dadurch gespart, daß konstante Terme der Berechnungsvorschrift, z.B. der Term $R_R/L_R$ im Nenner, vernachlässigt werden. Die genannte Vernachlässigung hat zur Folge, daß keine Division im komplexen Zahlenraum, sondern lediglich im reellen Zahlenraum durchgeführt werden muß, was eine erhebliche Einsparung an Rechenkapazität mit sich bringt.

Die oben aufgeführte Berechnungsvorschrift verwendet die nicht-stationären Größen des Ständerspannungsraumzeigers $\underline{U}_S$ und des Ständerstromraumzeigers $\underline{I}_S$ zur Ermittlung des Flusses und geht somit über bekannte Verfahren, welche lediglich stationäre Größen miteinbeziehen, hinaus. Die elektrische Rotorkreisfrequenz $\omega_R$ wird über den Lagegeber LG erfaßt. Sie bestimmt sich aus dem Produkt aus der Polpaarzahl, dem Term $2\pi$ und der erfaßten Drehzahl. Das dadurch erhaltene, zur Ist-Drehzahl nist proportionale Signal wird zur Ermittlung der Differenz $\Delta n$ und auch an eine Kennlinie zur Feldschwächung KFS sowie auf die Recheneinheit zur Flußerfassung FE rückgeführt. Durch entsprechende Koordinatentransformation wird der ermittelte Rotorfluß $\Psi_R$ in den Flußbetrag I$\Psi$I und den Flußwinkel $\varepsilon$ aufgeteilt. Der in der Recheneinheit zur Flußerfassung FE ermittelte Flußbetrag I$\Psi$I wird nun auf den Feldregler FR und den Drehzahlregler DR rückgeführt. Der Feldregler FR wird eingangsseitig durch ein Differenzsignal angesteuert, welches aus dem Ausgangssignal der Kennlinie zur Feldschwächung KFS, dem Feldsollwert I$\Psi$I$_{soll}$, und dem rückgeführten Flußbetrag I$\Psi$I gebildet wird. Über den Flußregler FR wird so der gewünschte Flußbetrag eingeprägt. Fehler der Hauptfeldreaktanz, beispielsweise bedingt durch Fertigungstoleranzen und dadurch verursachter Abweichung des wahren Luftspaltes von dem in dem Motormodell zugrundegelegten Luftspalt, werden durch die so realisierte Flußregelung sicher kompensiert. Das hat zur Folge, daß jederzeit die volle Leistung erreicht werden kann, auch dann, wenn die Motorparameter nicht exakt identisch mit den Parametern des zugrundegelegten Modelles sind.

Orientierungsfehler werden durch einen Vergleich des benutzten Tranformationswinkels $\varepsilon_{trans}$ mit dem erfaßten Flußwinkel $\varepsilon$ erkannt und über eine Verstellung der Schlupffrequenz $f_S$ korrigiert. Dazu wird in dem in der Darstellung gemäß FIG 1 dargestellten Ausführungsbeispiel einer Vorrichtung gemäß der vorliegenden Erfindung der in der Recheneinheit zur Flußerfassung FE ermittelte tatsächliche Flußwinkel $\varepsilon$ mit einem am Stromregler SR anstehenden benutzten Transformationswinkel $\varepsilon_{trans}$ verglichen und eine eventuelle Differenz zwischen den beiden Signalen einem Orientierungsregler OR zugeleitet. Dieser Orientierungsregler OR kann nach Art eines PI-Reglers ausgebildet sein. Die Schlupffrequenz fs kann mit Hilfe eines Schlupfbestimmungsgliedes SBG aus dem Quotienten aus der momentbildenden Stromkomponente Iq$_{soll}$ und dem in der Recheneinheit zur Flußerfassung FE erfaßten Flußbetrag I$\Psi$I nach Wichtung mit einem konstanten Faktor gemäß der folgenden Berechnungsvorschrift bestimmt werden:

$$fs = \frac{Iq_{soll}}{I\Psi I} * \frac{R_R}{2\pi} * \frac{L_H}{L_R}$$

Dazu sind die entsprechenden Signale, nämlich das momentbildende Ausgangssignal des Drehzahlreglers DR, die Stromkomponente Iq$_{soll}$ sowie der in der Recheneinheit zur Flußerfassung FE erfaßte Flußbetrag I$\Psi$I zum Schlupfbestimmungsglied SBG geführt. Die am Ausgang des Schlupfbestimmungsgliedes SBG anstehende Schlupffrequenz $f_S$ wird nun mit einem am Ausgang des Orientierungsreglers OR anstehenden, einem eventuellen Orientierungsfehler proportionalen Frequenzsignal $\hat{f}$ verknüpft. Die durch die Verknüpfung korrigierte Schlupffrequenz f* wird einem Integrator RG zugeführt, wodurch aus dem korrigierten Schlupf frequenzsignal f* ein dazu proportionales Winkelsignal gebildet wird. Dieses am Ausgang des Regelglieds RG anstehende Winkelsignal wird mit der vom Lagegeber LG erfaßten Rotorlage zu einem Transformationswinkelsignal $\varepsilon_{trans}$ verknüpft, welches dem Stromregler SR zugeführt wird. Daneben wird dieser Transformationswinkel $\varepsilon_{trans}$, wie bereits weiter oben beschrieben, zur Ermittlung einer eventuellen Differenz zwischen diesem Signal und dem erfaßten Flußwinkel $\varepsilon$ an den Ausgang der Recheneinheit zur Flußerfassung FE rückgeführt.

Da ein direktes Kompensieren eines eventuell vorhandenen Orientierungsfehlers zu Momentstößen oder eventuell auch zur Instabilität an der Drehfeldmaschine DFM führen kann, erfolgt die Orientierungskorrektur allmählich auf sanfte Art und Weise durch Integration, wodurch eventuellen Momentenstößen wirkungsvoll vorgebeugt wird.

Sofern die Istdrehzahl n$_{ist}$ der Drehfeldmaschine DFM bekannt ist, was im Ausführungsbeispiel nach der Darstellung gemäß FIG 1 der Fall ist, so kann desweiteren mit Kenntnis des Korrektureingriffes, also des am Ausgang des Orientierungsreglers OR anstehenden einem eventuellen Orientierungsfehler proportionalen Frequenzsignals $\hat{f}$ der Läuferwiderstand RR nachgeführt werden. Eine solche optionale Weiterentwicklung des im vorstehenden dargestellten Verfahrens sowie einer Vorrichtung gemäß der vorliegenden Erfindung ist in der Darstellung gemäß FIG 1 in Form eines gestrichelt dargestellten Elementes zur Rotorwiderstandskorrektur RWK mit den entsprechenden ebenfalls gestrichelt dargestellten Signalen gezeigt. Dazu wird das zum Korrektureingriff am Ausgang des Orientierungsreglers OR anstehende Frequenzsignal $\hat{f}$ als ebenfalls für eine Korrektur des Läuferwiderstandes $R_R$ proportionale Größe $\hat{R}$ zur Rotorwiderstandskorrektur RWK geführt. Ein solches optionales Nachführen des Läuferwiderstandes $R_R$ ist von Vorteil, da Abweichungen des tatsächlichen Rotorwiderstandswertes $R_R$ vom modellhaft zugrundegelegten Läuferwiderstand, wie aus der vorstehenden Berechnungsvorschrift ersichtlich, zu Abweichungen der Schlupffrequenz $f_S$ und somit zu einer Fehlorientierung einer Drehfeldmaschine DFM führt. Zwar liefert bereits das erfindungsgemäße Verfahren einer Orientierungskorrektur mit Hilfe des Orientierungsreglers OR einen Orientierungsausgleich, auch wenn ein Nachführen des Läuferwiderstandes $R_R$ unterbleibt, doch wird durch eine zusätzliche Rotorwiderstandskorrektur RWK das Übergangsverhalten der Regelungsstruktur zur Orientierungskorrektur verbessert und damit die Orientierungskorrektur selbst schneller durchgeführt. Dies erfolgt aufgrund eines sich durch die zusätzliche Rotorwiderstandskorrektur ergebenden verbesserten Einschwingverhaltens des Orientierungsreglers OR, da diesem im Zuge folgender Anpassungen der Schlupffrequenz $f_s$ der bisherige Wert zur Korrektur des Läuferwiderstandes $R_R$ bekannt ist. Auf diese Art und Weise wird die Einschwingzeit deutlich verkürzt. Dies ist insbesondere bei einer Realisierung der erfindungsgemäßen Regelungsvorrichtung als digitaler Regler mit einem die Motorparameter enthaltenen zugrundegelegten Datenmodell, welches unter anderem auch den Läuferwiderstandswert beinhaltet, von Vorteil, da dabei der für die Durchführung der Berechnungen gemäß der im vorstehenden beschriebenen Berechnungsvorschriften zugrundegelegte Läuferwiderstandswert $R_R$ entsprechend dem ermittelten Korrekturwert $\hat{R}$ angepaßt werden kann. In dem in der Darstellung gemäß FIG 1 gezeigten Ausführungsbeispiel wird eine direkte Korrektur der Schlupffrequenz $f_s$ erreicht, indem von der Rotorwiderstandskorrektur RWK ein entsprechendes Korrektursignal $\hat{f}_R$ zum Schlupfbestimmungsglied SBG geführt wird, wo eine Korrektur der durch einen falschen Läuferwiderstand $R_R$ verfälschten Schlupffrequenz erfolgt. Dies geschieht beispielsweise dadurch, daß man den zum Ausgangswert des Orientierungsreglers OR gehörigen Läuferwiderstand RR ermittelt. Dieser wird geglättet und auf den Ausgang des Schlupfbestimmungsgliedes SBG geschaltet. Dies wird jedoch erst dann durchgeführt, wenn das Moment der Drehfeldmaschine DFM einen vorgegebenen Schwellwert überschreitet.

Alternativ zur Erfassung der Rotorlage über einen Lagegeber LG, welcher an der Rotorachse der Drehfeldmaschine DFM befestigt ist, läßt sich auch ein gleichermaßen befestigter Drehzahlgeber verwenden, welcher die Istdrehzahl $n_{ist}$ bzw. die dazu proportionale elektrische Rotorkreisfrequenz $\omega_R$ liefert. Umgekehrt muß aus diesem Signal dann in einem entsprechend anders gestalteten Umrechnungsglied UG die entsprechende Rotorlage zur Verknüpfung mit dem Ausgangssignal des Regelgliedes RG bestimmt werden.

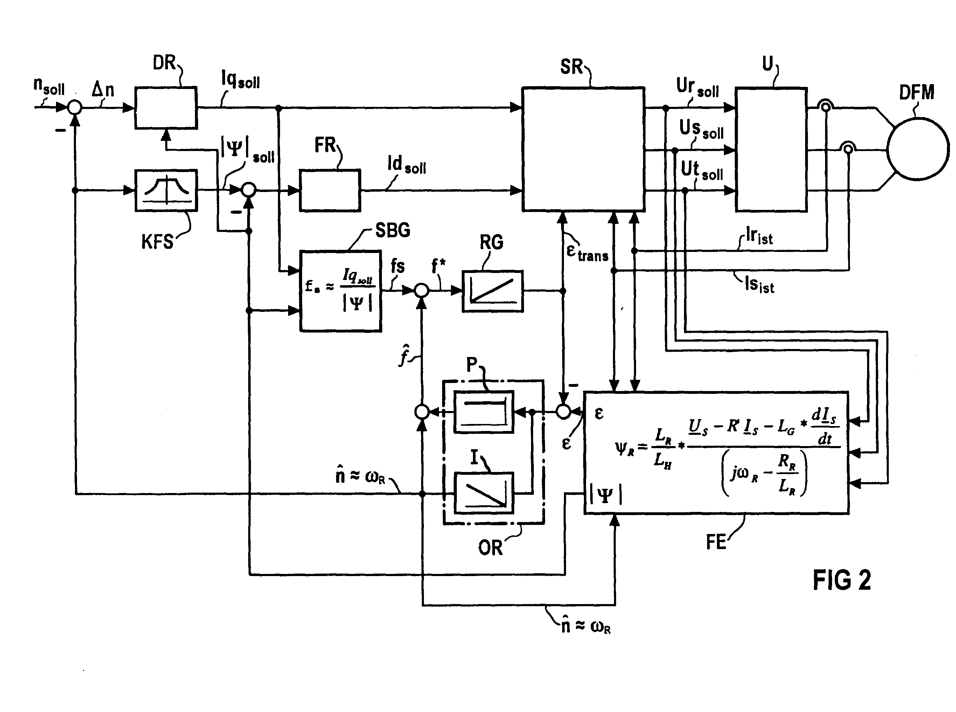

In der Darstellung gemäß FIG 2 ist das Blockschaltbild einer alternativen Ausgestaltung einer Vorrichtung zur feldorientierten Regelung für eine Drehfeldmaschine DFM ohne Erfassung der Rotorlage bzw. der Istdrehzahl gezeigt. Die Anordnung der Elemente im Blockschaltbild entspricht im wesentlichen denen der Darstellung gemäß FIG 1, wobei Elemente mit gleicher Funktion der besseren Vergleichbarkeit halber mit dem gleichen Bezugszeichen bezeichnet sind. Insoweit wie sich die Funktionalität der beiden alternativen Ausführungsbeispiele nach FIG 1 und FIG 2 entspricht, werden solche Elemente nicht noch einmal beschrieben, sondern es gelten die bereits im voranstehenden gemachten Ausführungen. Insofern wird in der nun folgenden Erläuterung des alternativen Ausführungsbeispiels gemäß der Darstellung nach FIG 2 auf die Unterschiede zum ersten Ausführungsbeispiel abgestellt.

Der wesentliche Unterschied und damit Vorteil zum ersten Ausführungsbeispiel einer Vorrichtung zur feldorientierten Regelung für eine Drehfeldmaschine mit Erfassung der Rotorlage besteht darin, daß eine solche Erfassung nicht mehr notwendig ist und somit auf einen Lagegeber bzw. Drehzahlgeber verzichtet werden kann. Da es sich bei solchen Weggebern um relativ aufwendige Geräte handelt, die wegen ihrer Maschinennähe sehr hohen Umgebungsbelastungen ausgesetzt sind und darüber hinaus die Einbaugröße des gesamten Aggregates ungünstig beeinflußen, ist eine solche Ausgestaltung des erfindungsgemäßen Verfahrens bzw. der Vorrichtung in solchen Anwendungsfällen, in denen möglichst unempfindliche und klein konstruierte Drehfeldmaschinen zum Einsatz gelangen sollen, von Vorteil. Dies wird dadurch erreicht, daß anstelle eines direkt erfaßten Drehzahlistwertes aus dem Ausgangssignal des Orientierungsreglers OR, welcher in der Darstellung gemäß FIG 2 in gestrichelter Form dargestellt ist und aus einem P-Regler P sowie parallel geschaltetem I-Regler I besteht, ein der Istdrehzahl proportionaler Wert $\hat{n}$ abgeleitet wird, welcher der elektrischen Rotorkreisfrequenz $\omega R$ proportional ist. Während das Signal zur Orientierungskorrektur $\hat{f}$ durch Verknüpfung der beiden Komponenten P-Regler P und I-Regler I gebildet wird, wird das drehzahlproportionale Signal $\hat{n}$, welches der elektrischen Rotorkreisfrequenz $\omega_R$ proportional ist, lediglich aus dem Anteil des I-Reglers I abgeleitet.

Dieses drehzahlproportionale Signal $\hat{n}$ wird zum einen zur Recheneinheit zur Flußerfassung FE rückgeführt, zum anderen zur Kennlinie für die Feldschwächung KFS rückgeführt als auch negativ auf den eingangsseitig vorgegebenen Drehzahlsollwert $n_{soll}$ rückgekoppelt. Eine in der Darstellung gemäß FIG 1 vorgesehene Verknüpfung der daraus ermittelten Rotorlage mit dem Ausgangssignal des Integrators RG kann bei einer Ausführung gemäß dem Ausführungsbeispiel, wie es in der Darstellung gemäß FIG 2 gezeigt ist, entfallen. Ein Umrechnungsglied UG ist entbehrlich. Auf diese Art und Weise wird erreicht, daß die mit dem erfindungsgemäßen Verfahren bzw. einer zu dessen Durchführung geschaffenen Vorrichtung erzielbaren Vorteile auch bei solchen Drehfeldmaschinen ohne Erfassung der Rotorlage bzw. der Drehzahl erreicht werden können.

Sofern für die verwendete Drehfeldmaschine DFM aufgrund der speziellen Anwendung auch eine Lageregelung vorgesehen ist, kann in einer weiteren alternativen Ausgestaltung ein entsprechender Istdrehzahlwert bzw. der elektrischen Rotorkreisfrequenz $\omega_R$ proportionaler Wert, welcher im Lageregelkreis ohnehin vorhanden ist, entnommen werden.

Das Verfahren sowie die Vorrichtung der vorliegenden Erfindung lassen sich sowohl in Form von Hardware als auch in Form von Software realisieren. Letztere Variante bietet sich vor allem zur Realisierung von digitalen Reglern an, welche nach dem erfindungsgemäßen Verfahren arbeiten. Zur Durchführung der im voranstehenden angegebenen Berechnungsvorschriften bieten sich insbesondere Signalprozessoren zur Realisierung der dazu erforderlichen Recheneinheiten an. Dies gilt besonders für die Realisierung der Recheneinheit zur Flußerfassung FE. Solchermaßen konzipierten digitalen Regelsystemen zur feldorientierten Regelung gemäß der vorliegenden Erfindung liegt, wie in beiden dargestellten Ausführungsbeispielen ersichtlich, das Prinzip zugrunde, daß ein Strom und eine Spannung nach Betrag und dem Winkel zwischen beiden nach Vorgabe von Modelldaten der Drehfeldmaschine eingeprägt werden, so daß diese Drehfeldmaschine die zugehörige Leistung als mechanische Leistung abgeben muß, selbst wenn sich die realen Motordaten der verwendeten Drehfeldmaschine von den Modelldaten, die dem digitalen Regelsystem zugrundeliegen, unterscheiden.

In einer alternativen Vorgehensweise kann eine Kombination aus dem eingangs erwähnten herkömmlichen Verfahren zur feldorientierten Regelung und dem im vorangehenden ausführlich geschilderten Verfahren zur feldorientierten Regelung gemäß der vorliegenden Erfindung geschaffen werden, indem im unteren Drehzahlbereich der Drehfeldmaschine das bisherige Strommodell nach einem herkömmlichen Verfahren belassen wird, da hier aufgrund der geringen Spannung die Flußerfassung teilweise ungenau wird. Im oberen Drehzahlbereich jedoch, wo die Vorteile der Flußerfassung uneingeschränkt genutzt werden können, werden die eingangs beschriebenen Nachteile durch Einsatz des erfindungsgemäßen Verfahrens bzw. einer Vorrichtung gemäß der vorliegenden Erfindung beseitigt.

Die vorangehende Beschreibung bevorzugter Ausführungsformen nach der Erfindung sind zum Zwecke der Veranschaulichung angegeben. Diese sind nicht erschöpfend. Auch ist die Erfindung nicht auf die genaue angegebene Form beschränkt, sondern es sind zahlreiche Modifikationen und Änderungen im Rahmen der vorstehend angegebenen technischen Lehre möglich. Eine bevorzugte Ausführungsform wurde gewählt und beschrieben, um die prinzipiellen Details der Erfindung und praktische Anwendungen zu verdeutlichen, um den Fachmann in die Lage zu versetzen, die Erfindung zu realisieren. Eine Vielzahl bevorzugter Ausführungsformen sowie weitere Modifikationen kommen bei speziellen Anwendungsgebieten in Betracht.

**Patentansprüche**

1. Verfahren zur feldorientierten Regelung einer Drehfeldmaschine mit folgenden Verfahrensschritten:
   1.1 eine momentbildende Größe ($Iq_{soll}$) wird eingeprägt,
   1.2 eine flußbildende Größe ($Id_{soll}$) wird eingeprägt und über einen Feldregelkreis (FR) geregelt,
   1.3 der Rotorfluß ($\psi_R$) wird aus den nicht-stationären Größen des Ständerspannungsraumzeigers ($\underline{U}_S$) und des Ständerstromraumzeigers ($\underline{I}_S$) nach oder proportional der folgenden prinzipiellen Beziehung

$$\psi_R = \frac{L_R}{L_H} * \frac{\underline{U}_S - R\,\underline{I}_S - L_G * \dfrac{d\underline{I}_s}{dt}}{\left(j\omega_R - \dfrac{R_R}{L_R}\right)}$$

$L_R$ = Rotorinduktivität
$L_H$ = Hauptfeldinduktivität
$L_S$ = Statorinduktivität
$R_R$ = Rotorwiderstand
$R_S$ = Ständerwiderstand
$\omega_R$ = Elektrische Rotorkreisfrequenz

mit

$$R' = R_S + R_R * \frac{L_H^2}{L_R^2} \quad \text{und} \quad L_G = L_S - \frac{L_H^2}{L_R}$$

bestimmt, woraus durch Koordinatentransformation Flußbetrag ($|\Psi|$) und Flußwinkel ($\varepsilon$) ermittelt werden,
1.4 der Flußbetrag ($|\Psi|$) wird über den Feldregelkreis (FR) eingeprägt,
1.5 Orientierungsfehler der Feldachse werden durch eine Frequenzverstellung, insbesondere durch Verstellung der Schlupffrequenz ($f_s$), entsprechend einer Differenz zwischen benutztem Transformationswinkel ($\varepsilon_{trans}$) und erfaßtem Flußwinkel ($\varepsilon$) korrigiert,
1.6 über einen Stromregelkreis (SR) oder Spannungsregelkreis werden die das Drehfeld der Maschine (DFM) auslösenden Spannungen ($Ur_{soll}$, $Us_{soll}$, $Ut_{soll}$) bzw. Ströme ($Ir_{ist}$, $Is_{ist}$) entsprechend den korrigierten Sollgrößen ($Iq_{soll}$, $Id_{soll}$, $\varepsilon_{trans}$) erzeugt.

2. Verfahren nach Anspruch 1, mit folgendem weiteren Verfahrensschritt:
   2.1 die elektrische Rotorkreisfrequenz ($\omega_R$) wird direkt durch Messung der Ist-Drehzahl ($n_{ist}$) oder der Rotorlage bestimmt oder indirekt aus dem Signal zur Orientierungskorrektur ($\hat{f}$) abgeleitet ($\hat{n}$) oder aus einem eventuell vorhandenen Lageregelkreis übernommen.

3. Verfahren nach Anspruch 1 oder 2, mit folgenden weiteren Verfahrensschritten:
   3.1 die Orientierungkorrektur ($\hat{f}$) erfolgt nicht abrupt, sondern allmählich auf sanfte Art und Weise, insbesondere durch integrale Ausregelung,
   3.2 die Schlupffrequenz ($f_s$) wird als eine dem Quo-

tienten aus momentbildender Größe ($Iq_{soll}$) und dem vorliegenden Fluß ($|\Psi|$) proportionale Größe bestimmt.

4. Verfahren nach Anspruch 1 bis einschließlich 3, mit folgendem weiteren Verfahrensschritt:

4.1 aus dem Signal zur Orientierungskorrektur ($\hat{f}$) wird ein weiteres Korrektursignal ($\hat{R}$) zum Nachführen des Rotorwiderstands ($R_R$) abgeleitet.

5. Vorrichtung zur feldorientierten Regelung einer Drehfeldmaschine mit folgenden Merkmalen:

5.1 es sind Mittel zur Generierung einer flußbildenden Größe ($Id_{soll}$) und einer momentbildenden Größe ($Iq_{soll}$) vorgesehen,

5.2 es sind Mittel zur Flußerfassung (FE) nach oder proportional der prinzipiellen Beziehung für den Rotorfluß ($\psi_R$)

$$\psi_R = \frac{L_R}{L_H} * \frac{U_s - R\, \underline{I}_s - L_G * \dfrac{d\underline{I}_s}{dt}}{\left(j\omega_R - \dfrac{R_R}{L_R}\right)}$$

mit

$$R' = R_S + R_R * \frac{L_H^2}{L_R^2} \quad \text{und} \quad L_G = L_S - \frac{L_H^2}{L_R}$$

$L_R$ = Rotorinduktivität
$L_H$ = Hauptfeldinduktivität
$L_S$ = Statorinduktivität
$R_R$ = Rotorwiderstand
$R_S$ = Ständerwiderstand
$\omega_R$ = Elektrische Rotorkreisfrequenz

vorgesehen, woraus durch Koordinatentransformation Flußbetrag ($|\Psi|$) und Flußwinkel ($\varepsilon$) ermittelbar ist,

5.3 es sind Mittel zum Regeln der Feldachse, insbesondere eine Feldregelung (FR) und Stromregelung (SR) vorgesehen,

5.4 es sind Mittel zum Ausgleich von Orientierungsfehlern (OR) der Feldachse durch eine Frequenzverstellung, insbesondere durch Verstellung der Schlupffrequenz ($f_s$), entsprechend einer Differenz zwischen benutztem Transformationswinkel ($\varepsilon_{trans}$) und erfaßtem Flußwinkel ($\varepsilon$) vorgesehen,

5.5 es sind Mittel (SR, U) zur Bestimmung der das Drehfeld der Maschine auslösenden Spannungen ($Ur_{soll}, Us_{soll}, Ut_{soll}$) bzw. Ströme ($Ir_{ist}, Is_{ist}$) entsprechend den korrigierten Sollgrößen ($Iq_{soll}, Id_{soll}, \varepsilon_{trans}$) vorgesehen.

6. Vorrichtung nach Anspruch 5, mit folgendem weiteren Merkmal:

6.1 die Schlupffrequenz ($f_s$) wird über ein Schlupfbestimmungsglied (SBG) als eine dem Quotienten aus momentbildender Größe ($Iq_{soll}$) und dem vorliegenden Fluß ($|\Psi|$) proportionale Größe bestimmt.

7. Vorrichtung nach Anspruch 5 oder 6, mit folgendem weiteren Merkmal:

7.1 es ist ein Drehzahlgeber bzw. ein Lagegeber (LG) zur Ermittlung einer Ist-Drehzahl ($n_{ist}$) oder der Rotorlage der Drehfeldmaschine (DFM) für die Drehzahlregelung (DR) vorgesehen, dessen Signal zugleich zur Bestimmung der elektrischen Rotorkreisfrequenz ($\omega_R$) dient.

8. Vorrichtung nach einem der Ansprüche 5 bis einschließlich 7, mit folgendem weiteren Merkmal:

8.1 aus dem Signal zur Orientierungskorrektur ($\hat{f}$) ist ein weiteres Signal ($\hat{n}$) abgeleitet, welches zugleich als eine der Ist-Drehzahl ($n_{ist}$) der Drehfeldmaschine (DFM) entsprechende Größe für die Drehzahlregelung (DR) dient.

9. Vorrichtung nach einem der Ansprüche 5 bis einschließlich 8, mit folgendem weiteren Merkmal:

9.1 es sind Mittel (RWK) zur Korrektur des Rotorwiderstands ($R_R$) vorgesehen, denen das Signal zur Orientierungskorrektur ($\hat{f}$) als Maß für die Rotorwiderstandskorrektur dient.

**Claims**

1. Method for the field-oriented control of a polyphase machine having the following procedural steps:

1.1 A torque-forming quantity ($Iq_{soll}$) is injected.

1.2 A flux-forming quantity ($Id_{soll}$) is injected and is controlled by way of a field control circuit (FR).

1.3 The rotor flux ($\Psi_R$) is determined from the nonsteady-state quantities of the stator voltage space vector ($\underline{U}_s$) and the stator current space vector ($\underline{I}_s$) according to or proportional to the following basic equation:

$$\psi_R = \frac{L_R}{L_H} * \frac{U_s - R'\, I_s - L_G * \dfrac{d I_s}{dt}}{\left(j\omega_R - \dfrac{R_R}{L_R}\right)}$$

where

$$R' = R_S + R_R * \frac{L_H^2}{L_R^2} \text{ and } L_G = L_S - \frac{L_H^2}{L_R}$$

$L_R$ = rotor inductance
$L_H$ = magnetizing inductance
$L_S$ = stator inductance
$R_R$ = rotor resistance
$R_S$ = stator resistance
$\omega_R$ = electric angular frequency of the rotor,

from which the flux magnitude ($|\Psi|$) and the flux angle ($\varepsilon$) are determined by means of coordinate transformation.

1.4 The flux magnitude ($|\Psi|$) is injected by way of the field control circuit (FR).

1.5 Orientation errors of the field axis are corrected by way of a frequency adjustment, in particular by adjusting the slip frequency ($f_s$), corresponding to a difference between the transformation angle ($\varepsilon_{trans}$) used and the flux angle ($\varepsilon$) detected.

1.6 By way of a current control circuit (SR) or voltage control circuit the voltages ($Ur_{soll}$, $Us_{soll}$, $Ut_{soll}$) and currents ($Ir_{ist}$, $Is_{ist}$) which initiate the rotating field of the machine (DFM) are generated according to the corrected desired quantities ($Iq_{soll}$, $Id_{soll}$, $\varepsilon_{trans}$).

2. Method according to claim 1, having the following further procedural step:

2.1 The electric angular frequency of the rotor ($\omega_R$) is determined directly by measuring the actual speed ($n_{ist}$) or the rotor position or is derived ($\hat{n}$) indirectly from the signal for orientation correction ($\hat{f}$) or is received from a possibly existing position control circuit.

3. Method according to claim 1 or 2, having the following further procedural steps:

3.1 The orientation correction ($\hat{f}$) does not take place abruptly, but gradually and gently, in particular by means of integral correction.

3.2 The slip frequency ($f_s$) is determined as a quantity proportional to the quotient of the torque-forming quantity ($Iq_{soll}$) and the existing flux ($|\Psi|$).

4. Method according to claim 1 up to and including claim 3, having the following further procedural step:

4.1 From the signal for orientation correction ($\hat{f}$) another correction signal ($\hat{R}$) is derived in order to correct the rotor resistance ($R_R$).

5. Device for the field-oriented control of a polyphase machine having the following features:

5.1 Means are provided to generate a flux-forming quantity ($Id_{soll}$) and a torque-forming quantity ($Iq_{soll}$).

5.2 Means are provided for flux detection (FE) according to or proportional to the basic equation for the rotor flux ($\Psi_R$)

$$\Psi_R = \frac{L_R}{L_H} * \frac{U_S - R' I_S - L_G * \frac{dI_S}{dt}}{\left( j\omega_R - \frac{R_R}{L_R} \right)}$$

where

$$R' = R_S + R_R * \frac{L_H^2}{L_R^2} \text{ and } L_G = L_S - \frac{L_H^2}{L_R}$$

$L_R$ = rotor inductance
$L_H$ = magnetizing inductance
$L_S$ = stator inductance
$R_R$ = rotor resistance
$R_S$ = stator resistance
$\omega_R$ = electric angular frequency of the rotor,

from which the flux magnitude ($|\Psi|$) and flux angle ($\varepsilon$) can be determined by means of coordinate transformation.

5.3 Means are provided for controlling the field axis, in particular a field control (FR) and a current control (SR).

5.4 Means are provided to compensate for orientation errors (OR) of the field axis by means of a frequency adjustment, in particular by adjusting the slip frequency ($f_s$), corresponding to a difference between the transformation angle ($\varepsilon_{trans}$) used and the flux angle ($\varepsilon$) detected.

5.5 Means (SR, U) are provided to determine the voltages ($Ur_{soll}$, $Us_{soll}$, $Ut_{soll}$) and currents ($Ir_{ist}$, $Is_{ist}$) initiating the rotating field of the machine corresponding to the corrected desired quantities ($Iq_{soll}$, $Id_{soll}$, $\varepsilon_{trans}$).

6. Device according to claim 5, having the following additional feature:

6.1 The slip frequency ($f_s$) is determined by way of a slip determining element (SBG) as a quantity proportional to the quotient of torque-forming quantity ($Iq_{soll}$) and the existing flux ($|\Psi|$).

7. Device according to claim 5 or 6, having the following additional feature:

7.1 A tachometer or a position sensor (LG) to determine an actual speed ($n_{ist}$) or the rotor position of the polyphase machine (DFM) for the speed control (DR) is provided, the signal of which at the same time is used to determine the electric angular frequency of the rotor ($\omega_R$).

8. Device according to one of claims 5 up to and including claim 7, having the following additional feature:

8.1 From the signal for orientation correction ($\hat{f}$) a further signal ($\hat{n}$) is derived which is used at the same time as a quantity for the speed control (DR) which corresponds to the actual speed ($n_{ist}$) of the polyphase machine (DFM).

9. Device according to one of claims 5 up to and including claim 8, having the following additional feature:

9.1 Means (RWK) are provided for correcting the rotor resistance ($R_R$), which means are served by the signal for orientation correction ($\hat{f}$) as a measure for the rotor resistance correction.

## Revendications

1. Procédé pour la régulation par orientation du champ d'un moteur à champ tournant avec les étapes opératoires suivantes :

1.1 on introduit une grandeur ($Iq_{soll}$) représentative du couple,

1.2 on introduit une grandeur ($Id_{soll}$) représentative du flux et on la régule par l'intermédiaire d'un circuit régulateur de champ (FR),

1.3 on détermine le flux du rotor ($\Psi_R$) à partir des grandeurs non stationnaires du vecteur de tension de stator ($\underline{U}_S$) et du vecteur de courant de stator ($\underline{I}_S$) suivant la relation de principe suivante ou proportionnellement à cette relation

$$\Psi_R = \frac{L_R}{L_H} * \frac{\underline{U}_s - R\,\underline{I}_s - L_G * \dfrac{d\underline{I}_s}{dt}}{\left(j\omega_R - \dfrac{R_R}{L_R}\right)}$$

avec

$$R' = R_S + R_R * \frac{L_H^2}{L_R^2} \quad \text{und} \quad L_G = L_S - \frac{L_H^2}{L_R}$$

$L_R$ = inductance du rotor
$L_H$ = inductance du champ principal
$L_S$ = inductance du stator
$R_R$ = résistance du rotor
$R_S$ = résistance du stator
$\omega_R$ = fréquence angulaire électrique du rotor puis on détermine par une transformation des coordonnées la valeur absolue du flux ($|\Psi|$) et l'angle du flux ($\varepsilon$),

1.4 on introduit la valeur absolue du flux ($|\Psi|$) par l'intermédiaire du circuit régulateur de champ (FR),

1.5 on corrige des erreurs d'orientation de l'axe du champ par un réglage de fréquence, en particulier par un réglage de la fréquence de glissement ($f_s$), en fonction d'une différence entre l'angle de transformation utilisé ($\varepsilon_{trans}$) et l'angle de flux détecté ($\varepsilon$),

1.6 on produit par l'intermédiaire d'un circuit régulateur de courant (SR) ou d'un circuit régulateur de tension, en fonction des grandeurs de consigne corrigées ($Iq_{soll}$, $Id_{soll}$, $\varepsilon_{trans}$), les tensions ($Ur_{soll}$, $Us_{soll}$ et $Ut_{soll}$) ou courants (Irist, Isist) qui créent le champ tournant du moteur (DFM).

2. Procédé selon la revendication 1, avec l'autre étape opératoire suivante :

2.1 on détermine la fréquence angulaire électrique du rotor ($\omega_R$) directement en mesurant la vitesse réelle (nist) ou la position du rotor ou on la déduit () indirectement du signal destiné à la correction d'orientation () ou on l'extrait d'un circuit régulateur de position éventuellement existant.

3. Procédé selon la revendication 1 ou 2, avec les autres étapes opératoires suivantes :

3.1 on n'effectue pas la correction d'orientation () brusquement mais petit à petit de manière douce, notamment par régulation intégrale,

3.2 on détermine la fréquence de glissement ($f_s$) comme étant une grandeur proportionnelle au quotient de la grandeur ($Iq_{soll}$) représentative du couple et du flux présent ($|\Psi|$).

4. Procédé selon les revendications 1 à 3, avec l'autre étape opératoire suivante :

4.1 on déduit du signal destiné à la correction d'orientation () un autre signal de correction () pour la rectification de la résistance du rotor ($R_R$).

5. Dispositif pour la régulation par orientation du champ d'un moteur à champ tournant avec les caractéristiques suivantes :

5.1 des moyens sont prévus pour produire une grandeur ($Id_{soll}$) représentative du flux et une grandeur ($Iq_{soll}$) représentative du couple,

5.2 des moyens (FE) sont prévus pour détecter le flux suivant la relation de principe pour le flux du rotor ($\Psi_R$) ou proportionnellement à cette relation

$$\Psi_R = \frac{L_R}{L_H} * \frac{U_s - R\,\underline{I}_s - L_G * \dfrac{d\underline{I}_s}{dt}}{\left(j\omega_R - \dfrac{R_R}{L_R}\right)}$$

avec

$$R' = R_S + R_R * \frac{L_H^2}{L_R^2} \quad \text{und} \quad L_G = L_S - \frac{L_H^2}{L_R}$$

$L_R$ = inductance du rotor
$L_H$ = inductance du champ principal
$L_S$ = inductance du stator
$R_R$ = résistance du rotor
$R_S$ = résistance du stator
$\omega_R$ = fréquence angulaire électrique du rotor

puis la valeur absolue du flux (|Ψ|) et l'angle du flux (ε) peuvent être déterminés par une transformation des coordonnées,

5.3 des moyens sont prévus pour régler l'axe du champ, notamment une régulation du champ (FR) et une régulation du courant (SR),

5.4 des moyens (OR) sont prévus pour compenser des erreurs d'orientation de l'axe du champ par un réglage de fréquence, en particulier par un réglage de la fréquence de glissement ($f_s$), en fonction d'une différence entre l'angle de transformation utilisé ($\varepsilon_{trans}$) et l'angle de flux détecté (ε),

5.5 des moyens (SR, U) sont prévus pour déterminer en fonction des grandeurs de consigne corrigées ($Iq_{soll}$, $Id_{soll}$, $\varepsilon_{trans}$) les tensions ($Ur_{soll}$, $Us_{soll}$ et $Ut_{soll}$) ou courants ($Ir_{ist}$, $Is_{ist}$) qui créent le champ tournant du moteur.

6. Dispositif selon la revendication 5, avec l'autre caractéristique suivante :

6.1 la fréquence de glissement ($f_s$) est déterminée par l'intermédiaire d'un élément de détermination de glissement (SBG) comme étant une grandeur proportionnelle au quotient de la grandeur ($Iq_{soll}$) représentative du couple et du flux présent (|Ψ|).

7. Dispositif selon la revendication 5 ou 6, avec l'autre caractéristique suivante :

7.1 il est prévu un transmetteur de vitesse ou un transmetteur de position (LG) pour déterminer une vitesse réelle (nist) ou la position de rotor du moteur à champ tournant (DFM) en vue de la régulation de vitesse (DR), le signal du transmetteur servant en même temps pour déterminer la fréquence angulaire électrique du rotor ($\omega_R$).

8. Dispositif selon l'une des revendications 5 à 7, avec l'autre caractéristique suivante :

8.1 un autre signal () est déduit du signal destiné à la correction d'orientation (), lequel autre signal sert en même temps de grandeur correspondant à la vitesse réelle (nist) du moteur à champ tournant (DFM) en vue de la régulation de vitesse (DR).

9. Dispositif selon l'une des revendications 5 à 8, avec l'autre caractéristique suivante :

9.1 des moyens (RWK) sont prévus pour corriger la résistance du rotor ($R_R$), moyens pour lesquels le signal destiné à la correction d'orientation () sert de mesure pour la correction de la résistance du rotor.

FIG 1

FIG 2

EP 0 771 067 B1